# EUROPÄISCHE PATENTSCHRIFT

(11) **EP 3 108 158 B1**
(45) Veröffentlichungstag und Bekanntmachung des Hinweises auf die Patenterteilung: **21.02.2018**
(21) Anmeldenummer: 14827718.9
(22) Anmeldetag: 11.12.2014
(51) Int. Cl.: F16H 63/30, F16H 57/022, F16H 57/12

(54) **SCHALTVORRICHTUNG**
SHIFTING DEVICE
DISPOSITIF DE CHANGEMENT DE VITESSE

(30) Priorität: 18.02.2014 DE 102014202884
(43) Veröffentlichungstag der Anmeldung: 28.12.2016
(73) Patentinhaber: Schaeffler Technologies AG & Co. KG, 91074 Herzogenaurach (DE)
(72) Erfinder: KIRCHGÄSSNER, Tobias, 90766 Fürth (DE); LAUTNER, Sven, 91074 Herzogenaurach (DE); REISSBERGER, Stefan, 96193 Wachenroth (DE)
(86) Internationale Anmeldenummer: PCT/DE2014/200699
(87) Internationale Veröffentlichungsnummer: WO 2015/124128

(56) Entgegenhaltungen:
- DE-A1-102009 059 908
- DE-A1-102010 013 938

## Beschreibung

### Gebiet der Erfindung

Die Erfindung betrifft eine Schaltvorrichtung für ein Wechselgetriebe eines Kraftfahrzeugs, mit einem Gehäuse und einer gegenüber dem Gehäuse bewegbaren Schaltwelle, die entlang ihrer Längsachse in eine Wählrichtung verschiebbar und mittels eines Schalthebels um ihre Längsachse in eine Schaltrichtung drehbar ist, wobei die Schaltvorrichtung wenigstens einen einstellbaren Endanschlag zur Begrenzung einer Schalt- und/oder Wählbewegung aufweist.

### Hintergrund der Erfindung

Herkömmliche Schaltvorrichtungen umfassen eine Vielzahl von Einzelteilen, die jeweils mit bestimmten Toleranzen hergestellt werden. Der Montageprozess sowie eine nachfolgende Wärmebehandlung zum Härten der Rasierhülse haben einen erheblichen Einfluss auf Schaltwege. Um diese herstellungsbedingten Toleranzen ausgleichen zu können, sind bereits Schaltvorrichtungen vorgeschlagen worden, bei denen Schaltwege durch Endanschläge begrenzt werden können.

Eine bereits bekannte Lösung ist das Ausgleichen von Toleranzen durch Hilfselemente wie Zusatzscheiben, dies ist jedoch mit einem hohen Aufwand verbunden.

In der DE 10 2009 059 908 A1 wird eine Schalteinheit vorgeschlagen, die einstellbare Anschläge zur Begrenzung von Schalt- und/oder Wählbewegungen aufweist, bei der mehrere Anschläge durch eine einzige Halterung gemeinsam fixiert sind.

In der DE 10 2010 013 938 A1, welche alle Merkmale des Oberbegriffs des Anspruchs 1 offenbart, wird eine Schaltvorrichtung beschrieben, die eine Mehrzahl von zylinderförmigen Anschlägflächen aufweist. Diese Anschlagflächen sind koaxial auf einem Führungsstift verdrehfest angeordnet.
Der Erfindung liegt die Aufgabe zugrunde, eine Schaltvorrichtung anzugeben, die eine einfache Einstellung eines Endanschlags eines Schaltwegs ermöglicht.

### Zusammenfassung der Erfindung

Zur Lösung dieser Aufgabe ist bei einer Schaltvorrichtung der eingangs genannten Art erfindungsgemäß vorgesehen, dass der einstellbare Endanschlag als Bolzen ausgebildet ist, der wenigstens eine zur Längsachse des Bolzens exzentrische Anlagefläche aufweist und zum Einstellen des Endanschlags in einer bestimmten Relativposition zum Gehäuse angebracht ist.
Anders als bei herkömmlichen Schaltvorrichtungen wird erfindungsgemäß kein konzentrischer Bolzen verwendet, stattdessen ist ein Bolzen mit einer zur Längsachse exzentrischen Anlagefläche vorgesehen, so dass durch Drehen des Bolzens um seine Längsachse der Endanschlag und damit der Schaltweg einer Schaltbewegung oder einer Wählbewegung eingestellt werden kann. Dadurch ergibt sich der Vorteil, dass lediglich ein einziges Bauteil, nämlich der die exzentrische Anlagefläche aufweisende Bolzen, benötigt wird. Durch eine entsprechende Positionierung des Bolzens relativ zum Gehäuse, genauer gesagt durch Drehen des Bolzens in eine bestimmte Relativposition bezüglich des Gehäuses, kann somit der Endanschlag auf ein gewünschtes oder benötigtes Maß eingestellt werden.

Im einfachsten Fall weist der Bolzen wenigstens eine exzentrische ringförmige Anlagefläche auf, vorzugsweise sind jedoch mehrere in Axialrichtung voneinander beabstandete Anlagenflächen vorgesehen. Auf diese Weise kann jeder Schalt- oder Wählbewegung eine entsprechende Anlagefläche und somit ein Endanschlag zugeordnet werden. Zwischen den voneinander in Axialrichtung beabstandeten Anlagenflächen können weitere Flächen vorgesehen sein, die im eingebauten Zustand an der Innenseite des Gehäuses anliegen.

Bei der erfindungsgemäßen Schaltvorrichtung kann es vorgesehen sein, dass das Gehäuse eine Öffnung aufweist, in die der Bolzen einsetzbar ist.

Vorzugsweise sind Bolzen und Gehäuse dabei so aufeinander abgestimmt, dass der Bolzen im montierten Zustand zumindest näherungsweise oberflächenbündig mit der Öffnung in dem Gehäuse abschließt.

Um einen sicheren Halt des Bolzens in dem Gehäuse zu gewährleisten, wird es bei der erfindungsgemäßen Schaltvorrichtung bevorzugt, dass der Bolzen an einem Ende einen zentrischen Abschnitt aufweist, der in eine entsprechend gegengleich geformte Aufnahme in dem Gehäuse einsetzbar oder eingesetzt ist. Der zentrische Abschnitt ist somit zentrisch zur Längsachse des Bolzens ausgebildet. Um eine Montage zu ermöglichen, ist die Öffnung in dem Gehäuse selbstverständlich so bemessen, dass der Bolzen trotz der exzentrischen Anlageflächen durch die Öffnung einführbar ist. Ein besonders sicherer Halt des Bolzens in dem Gehäuse ergibt sich bei der erfindungsgemäßen Schaltvorrichtung, wenn der Bolzen in das Gehäuse eingepresst ist. Das Einpressen des Bolzens erfolgt im Rahmen der Montage der Schaltvorrichtung, dabei wird der Bolzen durch Drehen in eine bestimmte Relativposition zum Gehäuse derart positioniert, dass der gewünschte Endanschlag eingestellt wird. Erfahrungsgemäß ist es ausreichend, lediglich eine Anlagefläche des Bolzens so zu drehen, dass sich der gewünschte Endanschlag bzw. die gewünschte Schaltwegbegrenzung ergibt, diese Position ist dann auch für die anderen Anlageflächen, die anderen Schaltbewegungen oder Wählbewegungen zugeordnet sind, passend.

Um die Einstellung des Endanschlags zu erleichtern, kann es bei der erfindungsgemäßen Schaltvorrichtung vorgesehen sein, dass der Bolzen und oder das Gehäuse wenigstens eine eine Einstellung des Endanschlags ermöglichende Markierung aufweisen. Vorzugsweise weisen sowohl der Bolzen als auch das Gehäuse jeweils wenigstens eine entsprechende Markierung auf, die eine Nullposition angibt. Ausgehend von dieser Nullposition kann der Bolzen gegenüber dem Gehäuse verdreht eingesetzt und eingepresst werden, so dass eine bestimmte Relativposition des Bolzens und somit aufgrund der Exzentrizität der Anlageflächen ein bestimmter Endanschlag fest eingestellt werden kann.

Um das Einstellen eines bestimmten Endanschlags weiter zu vereinfachen, kann es gemäß einer Weiterbildung der Erfindung vorgesehen sein, dass der Bolzen und/oder das Gehäuse eine Maßverkörperung aufweist. Beispielsweise kann der Bolzen auf seiner von außen sichtbaren Oberseite oder das Gehäuse in der Nähe der Öffnung eine vorzugsweise kreissegmentförmige Skala aufweisen, wobei das jeweils andere Bauteil wenigstens eine Markierung aufweist. Indem eine bestimmte Relativposition zwischen der Markierung und der Skala eingestellt wird, kann ein bestimmter Endanschlag fest eingestellt werden.

Bei der erfindungsgemäßen Schaltvorrichtung wird es bevorzugt, dass sie zwei voneinander beabstandete, jeweils einen Endanschlag für eine Schalt- oder Wählbewegung bildende Bolzen aufweist. Auf diese Weise ist eine Einstellung der Endanschläge in beiden Betätigungsrichtungen möglich.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine Seitenansicht eines Bolzens einer erfindungsgemäßen Schaltvorrichtung;
- Figur 2: eine Draufsicht auf eine erfindungsgemäße Schaltvorrichtung mit montierten Bolzen und
- Figur 3: einen Schnitt durch das in Figur 2 gezeigte Gehäuse in einen vergrößerten Maßstab.

### Ausführliche Beschreibung der Zeichnung

Eine Schaltvorrichtung ist Bestandteil eines Wechselgetriebes für ein Kraftfahrzeug und umfasst einen drehfest mit einer Schaltwelle verbundenen Schalthebel. Der Schalthebel ist rechtwinklig zur Schaltwelle angeordnet, so dass über ihn ein Drehmoment eingeleitet werden kann, um die Schaltwelle um ihre Längsachse zu drehen. Dazu weist der Schalthebel einen Kugelzapfen auf, an dem ein Seilzug befestigt ist, der mit einem Handschalthebel im Innenraum eines Kraftfahrzeugs verbunden ist.

Des Weiteren umfasst eine Schaltvorrichtung einen Wählhebel, der ebenfalls mit einem Kugelzapfen versehen ist und über einen zweiten Seilzug mit dem Handschalthebel verbunden ist. Wenn der Fahrer den Handschalthebel betätigt, wird der Wählhebel geschwenkt, wodurch die Schaltwelle entlang ihrer Längsachse in eine Wählrichtung verschoben wird. Nachdem die richtige axiale Position erreicht worden ist, verdreht der Schalthebel die Schaltwelle, woraufhin ein Schaltvorgang durch eine auf der Schaltwelle angeordnete Rastierhülse ausgelöst wird. Eine Rastierhülse oder eine Schalthülse weist ein vorspringendes Bauteil, beispielsweise eine vorspringende Nase auf, die beim Schalten eines Gangs in eine Endstellung verdreht wird und dabei gegen einen Endanschlag anschlägt, so dass eine weitere Verdrehung oder Verschiebung unterbunden wird.

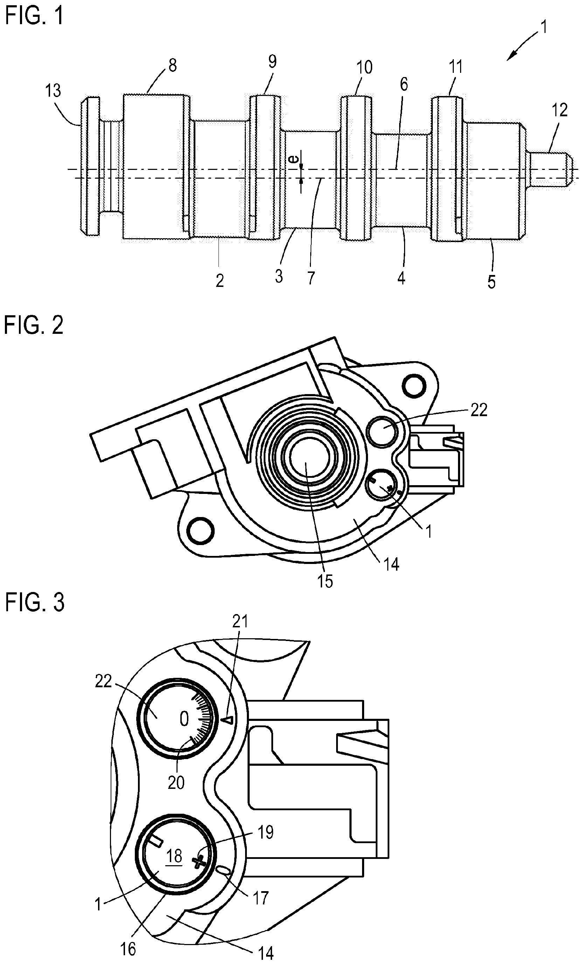

Figur 1 zeigt einen Bolzen 1, der mehrere voneinander in Axialrichtung beabstandete Anlageflächen 2, 3, 4, 5 aufweist. Derartige Bolzen werden auch als Shimturm bezeichnet. Wesentlich ist dabei, dass die Anlageflächen 2 bis 5, die als Ringflächen ausgebildet sind, bezüglich der Längsachse 6 des Bolzens 1 exzentrisch angeordnet sind. Das bedeutet, dass die Längsachse 7 der Anlageflächen 2, 3, 4, 5 um das Maß e gegenüber der Längsachse 6 verschoben ist. Zwischen den Anlageflächen 2, 3, 4, 5 sind weitere ringförmige Flächen 8, 9, 10, 11 ausgebildet, die der Lagerung des Bolzens 1 in dem Gehäuse der Schaltvorrichtung dienen. Die Exzentrizität e ist in Figur 1 übertrieben dargestellt, tatsächlich kann sie beispielsweise 1 mm oder maximal 2 mm betragen.

An einem Ende 12 weist der Bolzen 1 einen zentrischen Abschnitt auf, der bei der Montage in eine entsprechend gegengleich geformte Aufnahme in dem Gehäuse eingesetzt, insbesondere eingepresst, wird. Das dem Ende 12 entgegengesetzte Ende des Bolzens 1 weist eine eine Markierung aufweisende Fläche 13 auf. Der Bolzen 1 ist ein Drehteil, die Exzentrizität wird durch zweimaliges radial versetztes Einspannen erzeugt.

Figur 2 ist eine Draufsicht und zeigt den in einem Gehäuse 14 montierten Bolzen 1. In dem Gehäuse 13 ist die Schaltwelle 15 aufgenommen, die sowohl axial als auch in Umfangsrichtung bewegbar ist.

Neben dem Bolzen 1 ist ein weiterer Bolzen 22 vorgesehen, der ebenfalls in das Gehäuse 14 eingesetzt ist. Durch die beiden Bolzen 1, 22 werden Endanschläge für beide Bewegungsrichtungen der Schaltwelle 15 gebildet. Jeder Bolzen 1, 22 definiert durch seine positionierten Anlageflächen einen Endanschlag, wodurch die Schaltwege begrenzt werden.

Figur 3 ist eine vergrößerte Ansicht des in Figur 2 gezeigten Gehäuses 14 im Bereich der Bolzen 1, 22. Neben einer Öffnung 16 in dem Gehäuse 14 ist eine Markierung 17 angebracht, in dem dargestellten Ausführungsbeispiel eine "0". Bei anderen Ausführungen kann die Markierung auch als Punkt oder Strich oder Pfeil ausgebildet sein. Die Oberseite 18 des Bolzens 1 weist ebenfalls eine Markierung auf, nämlich ein "+" 19. Wenn beide Markierungen 17, 19 mit einander in Deckung sind, befindet sich der Bolzen 1 bezüglich des Gehäuses 14 in seiner Ausgangsstellung. In dieser Position fällt die Längsachse 6 des Bolzens 1 mit der um die Exzentrizität e verschobenen Längsachse 7 der Anlageflächen 2, 3, 4, 5 zusammen. Durch eine Drehung des Bolzens 1 relativ zur Öffnung 16 des Gehäuses 14 kann eine gewünschte Exzentrizität eingestellt werden, wodurch die Endanschläge in eine bestimmte Position gebracht werden. Innerhalb einer Charge ändern sich die Toleranz üblicherweise nicht wesentlich, so dass es genügt, dem Bolzen 1 in einer einmal festgelegten Relativposition bezüglich der Öffnung 16 einzupressen.

Der zweite Bolzen 22 weist auf seiner Oberseite eine Maßverkörperung 20 auf, die als Skala ausgebildet ist und mehrere voneinander äquidistant angeordnete radiale Striche aufweist. Etwa in der Mitte dieser Striche gibt die Markierung "0" eine Ausgangsposition an. Gehäuseseitig ist ein Dreieck 21 als Markierung vorgesehen, dessen Spitze der Nullposition gegenüberliegt. Bei der Montage wird der Bolzen 22 in einer festgelegten Relativposition montiert, indem die Maßverkörperung 20 passend zu dem als Markierung dienenden Dreieck 21 positioniert wird, in dieser Position wird der Bolzen 22 eingepresst, wodurch die dem Bolzen 22 zugeordneten Endanschläge eingestellt werden.

### Bezugszahlenliste

- 1: Bolzen
- 2: Anlagefläche
- 3: Anlagefläche
- 4: Anlagefläche
- 5: Anlagefläche
- 6: Längsachse
- 7: Längsachse
- 8: Fläche
- 9: Fläche
- 10: Fläche
- 11: Fläche
- 12: Ende
- 13: Fläche
- 14: Gehäuse
- 15: Schaltwelle
- 16: Öffnung
- 17: Markierung
- 18: Oberseite
- 19: Markierung
- 20: Maßverkörperung
- 21: Dreieck
- 22: Bolzen

## Patentansprüche

1. Schaltvorrichtung für ein Wechselgetriebe eines Kraftfahrzeugs, mit einem Gehäuse (14) und einer gegenüber dem Gehäuse (14) bewegbaren Schaltwelle (15), die entlang ihrer Längsachse in eine Wählrichtung verschiebbar und mittels eines Schalthebels um ihre Längsachse in eine Schaltrichtung drehbar ist, wobei die Schaltvorrichtung wenigstens einen einstellbaren Endanschlag zur Begrenzung einer Schalt- und/oder Wählbewegung aufweist, **dadurch gekennzeichnet, dass** der einstellbare Endanschlag als Bolzen (1, 22) ausgebildet ist, der wenigstens eine zur Längsachse des Bolzens (1, 22) exzentrische Anlagefläche (2, 3, 4, 5) aufweist und zum Einstellen des Endanschlags in einer bestimmten Relativposition zum Gehäuse (14) angebracht ist.

2. Schaltvorrichtung nach Anspruch 1, **dadurch gekennzeichnet, dass** der Bolzen (1, 22) wenigstens eine exzentrische ringförmige Anlagefläche (2, 3, 4, 5) aufweist.

3. Schaltvorrichtung nach Anspruch 1 oder 2, **dadurch gekennzeichnet, dass** der Bolzen (1, 22) mehrere in Axialrichtung voneinander beabstandete Anlageflächen (2, 3, 4, 5) aufweist.

4. Schaltvorrichtung nach einem der vorangehenden Ansprüche, **dadurch gekennzeichnet, dass** das Gehäuse (14) eine Öffnung (16) aufweist, in die der Bolzen (1) einsetzbar ist.

5. Schaltvorrichtung nach einem der vorangehenden Ansprüche, **dadurch gekennzeichnet, dass** der Bolzen (1, 22) an einem Ende (12) einen zentrischen Abschnitt aufweist, der in eine entsprechend gegengleich geformte Aufnahme in dem Gehäuse (14) einsetzbar oder eingesetzt ist.

6. Schaltvorrichtung nach einem der vorangehenden Ansprüche, **dadurch gekennzeichnet, dass** der Bolzen (1, 22) in das Gehäuse eingepresst ist.

7. Schaltvorrichtung nach einem der vorangehenden Ansprüche, **dadurch gekennzeichnet, dass** der Bolzen (1, 22) und das Gehäuse (14) jeweils wenigstens eine eine Einstellung des Endanschlags ermöglichende Markierung (17, 19) aufweisen.

8. Schaltvorrichtung nach Anspruch 7, **dadurch gekennzeichnet, dass** der Bolzen (1, 22) und/oder das Gehäuse (14) eine Maßverkörperung (20) aufweist, die eine Einstellung des Endanschlags ermöglicht.

9. Schaltvorrichtung nach einem der vorangehenden Ansprüche, **dadurch gekennzeichnet, dass** sie zwei voneinander beabstandete, jeweils einen Endanschlag bildende Bolzen (1, 22) aufweist.

## Claims

1. Gearshift device for a variable-speed gearbox of a motor vehicle, having a housing (14) and having a gearshift shaft (15) which is movable relative to the housing (14) and which is displaceable along its longitudinal axis in a selecting direction and which is rotatable about its longitudinal axis in a gearshift direction by means of a gearshift lever, wherein the gearshift device has at least one adjustable end stop for limiting a gearshift and/or selecting movement, **characterized in that** the adjustable end stop is formed as a bolt (1, 22) which has at least one abutment surface (2, 3, 4, 5) eccentric with respect to the longitudinal axis of the bolt (1, 22) and which, for the adjustment of the end stop, is mounted in a particular relative position with respect to the housing (14).

2. Gearshift device according to Claim 1, **characterized in that** the bolt (1, 22) has at least one eccentric ring-shaped abutment surface (2, 3, 4, 5).

3. Gearshift device according to Claim 1 or 2, **characterized in that** the bolt (1, 22) has multiple abutment surfaces (2, 3, 4, 5) which are spaced apart from one another in an axial direction.

4. Gearshift device according to one of the preceding claims, **characterized in that** the housing (14) has an opening (16) into which the bolt (1) is insertable.

5. Gearshift device according to one of the preceding claims, **characterized in that** the bolt (1, 22) has, on one end (12), a central section which is insertable or inserted into a receptacle, of correspondingly counterpart form, in the housing (14).

6. Gearshift device according to one of the preceding claims, **characterized in that** the bolt (1, 22) is pressed into the housing.

7. Gearshift device according to one of the preceding claims, **characterized in that** the bolt (1, 22) and the housing (14) have in each case at least one marking (17, 19) which permits an adjustment of the end stop.

8. Gearshift device according to Claim 7, **characterized in that** the bolt (1, 22) and/or the housing (14) has a solid measure (20) which permits an adjustment of the end stop.

9. Gearshift device according to one of the preceding claims, **characterized in that** said gearshift device has two mutually spaced-apart bolts (1, 22) which form in each case one end stop.

## Revendications

1. Dispositif de changement de vitesses pour une boîte de vitesses d'un véhicule automobile, comprenant un boîtier (14) et un arbre de changement de vitesses (15) pouvant être déplacé par rapport au boîtier (14), qui peut être déplacé le long de son axe longitudinal dans une direction de sélection et qui peut être tourné au moyen d'un levier de changement de vitesse autour de son axe longitudinal dans une direction de changement de vitesses, le dispositif de changement de vitesses présentant au moins une butée de fin de course ajustable pour limiter un mouvement de changement de vitesses et/ou de sélection, **caractérisé en ce que** la butée de fin de course ajustable est réalisée sous forme de goujon (1, 22) qui présente au moins une surface d'appui (2, 3, 4, 5) excentrique par rapport à l'axe longitudinal du goujon (1, 22) et qui est monté dans une position relative déterminée par rapport au boîtier (14) pour ajuster la butée de fin de course.

2. Dispositif de changement de vitesses selon la revendication 1, **caractérisé en ce que** le goujon (1, 22) présente au moins une surface d'appui annulaire excentrique (2, 3, 4, 5).

3. Dispositif de changement de vitesses selon la revendication 1 ou 2, **caractérisé en ce que** le goujon (1, 22) présente plusieurs surfaces d'appui (2, 3, 4, 5) espacées les unes des autres dans la direction axiale.

4. Dispositif de changement de vitesses selon l'une quelconque des revendications précédentes, **caractérisé en ce que** le boîtier (14) présente une ouverture (16) dans laquelle peut être inséré le goujon (1).

5. Dispositif de changement de vitesses selon l'une quelconque des revendications précédentes, **caractérisé en ce que** le goujon (1, 22) présente à une extrémité (12), une portion centrale qui peut être insérée ou qui est insérée dans un logement formé de manière conjuguée correspondante dans le boîtier (14).

6. Dispositif de changement de vitesses selon l'une quelconque des revendications précédentes, **caractérisé en ce que** le goujon (1, 22) est enfoncé dans le boîtier.

7. Dispositif de changement de vitesses selon l'une quelconque des revendications précédentes, **caractérisé en ce que** le goujon (1, 22) et le boîtier (14) présentent à chaque fois au moins un marquage (17, 19) permettant un ajustement de la butée de fin de course.

8. Dispositif de changement de vitesses selon la revendication 7, **caractérisé en ce que** le goujon (1, 22) et/ou le boîtier (14) présentent une mesure matérialisée (20) qui permet un ajustement de la butée de fin de course.

9. Dispositif de changement de vitesses selon l'une quelconque des revendications précédentes, **caractérisé en ce qu'**il présente deux goujons (1, 22) espacés l'un de l'autre, formant chacun une butée de fin de course.
